# EUROPÄISCHE PATENTSCHRIFT

(11) **EP 2 491 076 B1**
(45) Veröffentlichungstag und Bekanntmachung des Hinweises auf die Patenterteilung: **16.01.2019**
(21) Anmeldenummer: 10754737.4
(22) Anmeldetag: 16.09.2010
(51) Int. Cl.: C08J 9/32, B29C 44/30

(54) **VERFAHREN ZUR HERSTELLUNG VON FLÄCHENPRODUKTEN AUS SILIKONGUMMI**
METHOD FOR PRODUCING PLANAR PRODUCTS FROM SILICONE RUBBER
PROCÉDÉ DE PRODUCTION DE PRODUITS PLATS À BASE DE CAOUTCHOUC DE SILICONE

(30) Priorität: 21.10.2009 DE 102009044299
(43) Veröffentlichungstag der Anmeldung: 29.08.2012
(73) Patentinhaber: ContiTech Elastomer-Beschichtungen GmbH, 30165 Hannover (DE)
(72) Erfinder: STORRE, Jens, 37176 Nörten-Hardenberg (DE); WURM, Thomas, 37186 Moringen-Fredelsloh (DE)
(74) Vertreter: Finger, Karsten
(86) Internationale Anmeldenummer: PCT/EP2010/063585
(87) Internationale Veröffentlichungsnummer: WO 2011/047923

(56) Entgegenhaltungen:
- DE-A1- 4 105 472
- DE-A1- 4 235 309
- DE-T2- 60 112 153
- FR-A1- 2 864 545
- US-A- 4 286 013
- DATABASE WPI Week 198650 Thomson Scientific, London, GB; AN 1986-328417 XP002603879 & JP 61 243836 A (YAMAUCHI RUBBER IND CO LTD) 30. Oktober 1986 (1986-10-30) in der Anmeldung erwähnt

## Beschreibung

Die Erfindung betrifft ein Verfahren zur Herstellung von Flächenprodukten aus Silikongummi mit poröser Struktur.

Unter Silikongummi mit poröser Struktur fallen solche, die geschäumt oder porös sind. Die Zellen der porösen Struktur können dabei geschlossen und/oder offen sein. Poröse Gummistrukturen werden üblicherweise durch den Einsatz von ggf. in Mikrokugeln verkapselten Treibmitteln erzeugt, die der Kautschukmischung im nicht vulkanisierten Zustand zudosiert werden und die bei Erhitzung, z. B. bei der Vulkanisation, Gase freisetzen. Die so entstehenden Einschlüsse werden durch die Vulkanisation im Gummi fixiert.

Aus dem Stand der Technik sind bereits verschiedene Silikonkautschukzusammensetzungen bzw. Zusammensetzungen auf Basis von Organopolysiloxanen bekannt. US 4,286,013 A) offenbart beispielsweise ein Flächengebilde, welches als Flammschutzschicht zwischen Kraftstofftanks oder Motoren und einem Passagier- oder Frachtabteil eingesetzt werden kann. Hierzu enthält das Flächengebilde 50 bis 70 Gew.-% eines vulkanisierten Diorganopolysiloxan-Kautschuks, 1 bis 10 Gew.-% eines faserartigen Füllstoffs, 20 bis 45 Gew.-% Mikroglashohlkugeln und 1 bis 5 Gew.-% eines Vulkanisationsmittels.

In FR 2 864 545 A1 wird die Herstellung eines Schaums beschrieben, der für die Deckel von Lebensmittelbehältern geeignet ist. Ein derartiger Deckel muss beständig sein gegen Salze und verschiedene Säuren, wie sie in Lebensmitteln vorkommen. Des Weiteren muss eine Anbindung an die Lebensmittelbehälter als solches möglich sein, der Deckel muss beständig sein gegen Pasteurisierung und Sterilisierungen und der Deckel muss einfach zu öffnen und zu schließen sein. Hierzu wird eine Silikonkautschukmischung, enthaltend wenigstens einen Haftvermittler und wenigstens einen Porenbildner, in einem Mischer hergestellt.

DE 42 35 309 A1 beschreibt eine Treibmittelzusammensetzung auf Grundlage von wässrigen Emulsionen, die Organopolysiloxane, Emulgatoren, Wasser und Verdickungsmittel enthalten. Diese Treibmittelzusammensetzung dient zur Herstellung von elastomeren Silikonschaumstoffen.

In DE 601 12 153 T2 werden Zusammensetzungen zur Herstellung elastomerer Silikonschaumstoffe beschrieben, enthaltend ein Organopolysiloxanharz, anorganische Füllstoffe, hohle thermoplastische Harzteilchen, ein Gemisch aus einem wasserlöslichen Silikon und Wasser, sowie einen Vernetzer für das Organopolysiloxanharz. In den hohlen thermoplastischen Harzteilchen ist ein Inertgas wie etwa Stickstoff eingeschlossen.

Die Verwendung von Mikrokugeln zur Herstellung von Gummi oder Kunststoffmaterial mit poröser Struktur ist bekannt. Die Mikrokugeln weisen Durchmesser im µm-Bereich auf. Hohle, expandierbare Mikrokugeln (Mikrosphären) aus thermoplastischem Kunststoffmaterial sind mit einem Treibmittel gefüllt und dehnen sich beim Erwärmen aus. Das so erhaltene Material wird z. B. für Antirutschbeschichtungen, Teppichuntermaterial oder Druckfarben mit dreidimensionalen Effekten eingesetzt. In PVC oder anderen Thermoplasten bieten die expandierbaren Mikrokugeln den Vorteil gegenüber herkömmlichen chemischen Treibmitteln, dass sie kontrolliert bei niedrigen Temperaturen schäumen, eine homogene Zellstruktur bewirken und ein größeres Zeit/Temperaturfenster aufweisen, bei dem ein Aufschäumen ohne Zusammenbruch der Zellstruktur vonstattengeht. Derartige Mikrokugeln werden z. B. unter dem Namen Expancel® von der Firma Akzo Nobel vertrieben.

Bereits vorexpandierte Mikrokugeln werden als leichte Füllstoffe zur Gewichtsreduktion von z. B. Dämmmaterial und Farbe eingesetzt. Zusätzlich ergeben sich oft auch Vorteile hinsichtlich der Akustik des erzeugten Materials.

Die vorgenannten Eigenschaften der Mikrokugeln hat man sich schon im Bereich der Kautschuktechnologie zu Nutze gemacht. So ist aus der EP 1 263 852 B1 ein geschäumtes Kautschukmaterial zur akustischen Entkopplung oder als Dämpfungsmaterial für marine Anwendungen bekannt. Nicht vorexpandierte Mikrokugeln aus thermoplastischem Material werden dabei unter milden Bedingungen in verschiedene Kautschukmischungen eingemischt. Die Mikrokugeln expandieren dann beim Heiz- und Vulkanisationsprozess und bilden eine Schaumstruktur.

In der DE-OS 2 117 892 werden Mikrokugeln für den Einsatz in der kompressiblen Schicht von Gummidrucktüchern vorgeschlagen. Hohle, thermoplastische Kunststoff-Mikrokugeln können dabei sowohl in vorexpandierter Form als auch in expandierbarer Form eingesetzt werden. Ein in der DE-OS 2 117 892 vorgeschlagenes und häufig genutztes Verfahren zur Einbringung der Mikrokugeln in das Kautschukpolymer besteht in einem Verteilen der Mikrokugeln in einer Kautschukmischungslösung aus Kautschukmischung und organischem Lösemittel. Diese Lösung wird dann zu einer Schicht gewünschter Dicke vergossen oder verteilt (Rakelverfahren), getrocknet und vulkanisiert. Die Lösung kann dabei direkt auf andere Schichten des Drucktuches aufgegossen oder darauf verteilt werden, beispielsweise auf einer Verstärkungsschicht aus einem Gewebe. Das Verfahren ist lösemittelbehaftet und daher ökologisch bedenklich. Ferner ist es energie- und kostenintensiv, da zunächst eine Kautschukmischungslösung hergestellt werden muss und nach dem Verteilen das Lösemittel vor der Vulkanisation wieder ausgetrieben werden muss.

In der JP 61243836 A wird eine Silikongummiwalze beschrieben, deren Silikongummilage hergestellt wurde, indem Silikonkautschuk mit 0,1 bis 30 Gew.-% expandierbaren Mikrokugeln, enthaltend eine flüchtige Substanz, und 1 bis 50 Gew.-% Silikonöl vermischt und im Anschluss auf 80 bis 200 °C in einer zylinderförmigen Walzenform zur Expansion der Mikrokugeln und Vernetzung des Silikonkautschuks erhitzt wurde. Flächenprodukte werden nicht beschrieben.

Bei der Einmischung der Mikrokugeln, die eine sehr geringe Dichte aufweisen, in Kautschukmischungen ergeben sich verarbeitungstechnische Probleme, da die Mikrokugeln stark stauben und sich elektrostatisch aufladen. Dies bereitet besonders bei der Verarbeitung von Kautschukmischungen auf einem Walzwerk Probleme. Das Mikrokugelmaterial ist schwer handhabbar. Zusätzlich lässt sich bei der Einmischung der Mikrokugeln auf einer Walze oft nur schwer und durch langes Verarbeiten eine gleichmäßige Verteilung der Mikrokugeln in der Mischung erzielen. Durch das lange Verarbeiten mit Einwirkung von Scherkräften kann es außerdem dazu kommen, dass die Mikrokugeln, insbesondere die vorexpandierten Mikrokugeln, zerstört werden und im Produkt dann keine Schaumstruktur mehr ausbilden. Wird nicht genug gemischt, erhält man im Gummi eine ungleichmäßige Schaumstruktur.

Der Erfindung liegt daher die Aufgabe zu Grunde, ein Verfahren zur Herstellung von Flächenprodukten aus Silikongummi mit poröser Struktur zur Verfügung zu stellen, bei dem die verarbeitungstechnischen Probleme verringert werden und eine gleichmäßige Porenstruktur erzielt wird.

Gelöst wird diese Aufgabe erfindungsgemäß dadurch, dass bei dem Verfahren
- ein Mikrokugeln-Silikonöl-Gemisch aus Mikrokugeln und Silikonöl im Gewichtsverhältnis von 10:1 bis 1:10 erzeugt wird, wobei die Mikrokugeln hohle, vorexpandierte Mikrokugeln mit einer Größe von 5 bis 100µm sind,
- eine Silikonkautschukmischung mit üblichen Mischungsbestandteilen erzeugt wird,
- das Mikrokugeln-Silikonöl-Gemisch auf einer Walze in die Silikonkautschukmischung eingemischt wird,
- die Silikonkautschukmischung zu Bahnen kalandriert wird und
- die Bahnen vulkanisiert werden.

Es hat sich herausgestellt, dass es durch die vorherige Vermischung der vorexpandierten Mikrokugeln mit einem Silikonöl im angegebenen Verhältnis gelingt, das staubige Mikrokugelmaterial zu binden und schnell und gleichmäßig auf einer Walze in die Silikonkautschukmischung einzuarbeiten. Die nach dem Walzen erhaltene Mischung lässt sich gut zu Bahnen kalandrieren und im Anschluss vulkanisieren, z. B. im Kessel oder über ein kontinuierliches Rotations-Vulkanisierverfahren. Man kann auf diese Weise Flächenprodukte, d. h. Bahnenware, aus Silikongummi mit gleichmäßiger poröser Struktur und einer Dichte von 0,1 bis 1,1 g/cm³ erhalten.

Bei dem erfindungsgemäßen Verfahren wurde außerdem festgestellt, dass die vorexpandierten Mikrokugeln bei der Mischungsverarbeitung auf dem Walzwerk und beim Kalandrieren nicht zerstört werden. Vermutlich bildet das Silikonöl eine schützende Schicht um die Mikrokugeln, so dass das umgebende Kautschukmaterial an den Mikrokugeln vorbeigleiten kann.

Das Gewichtsverhältnis von Mikrokugeln zu Silikonöl beträgt bei dem erfindungsgemäßen Verfahren 10:1 bis 1:10, vorzugsweise 5:1 bis 1:5. Wählt man Verhältnisse mit mehr Mikrokugeln, staubt das Material bei der Verarbeitung sehr stark. Außerdem kann es unter Umständen dazu kommen, dass die Mikrokugeln zum Teil beim Einmischen zerstört werden. Stellt man das Verhältnis von Mikrokugeln zu Silikonöl auf einen Wert größer als 1:10 ein, separiert sich das Gemisch. Hierdurch verliert das System seine homogene Eigenschaft und der Anteil des Silikonöls beeinträchtigt die Eigenschaften der Silikonkautschukmischung zu stark.

Das Mikrokugeln-Weichmacher-Gemisch kann mit Hilfe von üblichen Fluidmischern oder mit einem Flügelrührer herstellt werden. Dies kann ohne Zudosierung weiterer Hilfsmittel geschehen.

Um die Mikrokugeln schneller und besser mit dem Silikonöl zu vermischen, hat es sich jedoch als vorteilhaft erwiesen, dass das Silikonöl vor dem Vermischen mit den Mikrokugeln mit einem organischen Lösemittel im Gewichtsverhältnis von 5:1 bis 1:20 vermischt wird, welches vor der Einbringung in die Silikonkautschukmischung wieder entfernt wird. Dadurch wird die Oberflächenspannung des Silikonöls optimiert und gleichzeitig seine Viskosität gesenkt. Die Mikrokugeln können so besser benetzt und eingemischt werden. Als Lösemittel kommen alle gängigen organischen Lösemittel in Frage. Vorzugsweise werden solche Lösemittel eingesetzt, die einen geringen Siedepunkt haben, damit sie ohne großen Energieaufwand wieder entfernt werden können. Dies kann z. B. bei einem Flügelrührer durch anschließendes Anlegen eines Vakuums mit Hilfe einer Vakuumpumpe mit Kühlfalle erfolgen. Das Lösemittel kann dann wiederverwendet werden. Bevorzugt wird als Lösemittel Isopropanol als ökologisch unbedenkliches Lösemittel mit niedrigem Siedepunkt eingesetzt.

Erfindungsgemäß handelt es sich bei den Mikrokugeln um hohle, vorexpandierte Mikrokugeln mit einer Größe von 5 bis 100 µm. Bei Verwendung solcher vorexpandierter Mikrokugeln ergibt sich eine besonders gleichmäßige Schaum- oder Porenstruktur, da die Kugeln bereits expandiert sind und nicht auf unterschiedliche Temperatur- und Druckbereiche bei der Vulkanisation unterschiedlich reagieren und damit keine unterschiedlichen Porendurchmesser bei Expansion im Kautschuk entstehen. Zudem weisen Mikrokugeln aus thermoplastischem Kunststoffmaterial eine gewisse Elastizität auf und halten den Scherkräften in einer Kautschukmischung besser Stand.

Nach dem Kalandrieren der Kautschukmischung zu Bahnen erfolgt die Vulkanisation. Diese kann über Formen-, Kessel-, Dampfdruck- oder Rotations-Vulkanisierverfahren erfolgen.

Besonders bevorzugt ist, wenn die nach dem Kalandrieren erhaltene Bahn über ein Rotations-Vulkanisierverfahren, z. B. dem so genannten AUMA-Verfahren, kontinuierlich vulkanisiert wird. Bei dem kontinuierlichen, für Bahnenware besonders geeigneten Verfahren der Rotationsvulkanisation wird die Kautschukmischungsbahn mittels eines Stahlbandes oder eines gummibelegten Gliederbandes auf eine dreh- und beheizbare Trommel gepresst. Mit dem erfindungsgemäßen Verfahren kann durch Verwendung der vorexpandierten Mikrokugeln im Rotations-Vulkanisierverfahren eine besonders gleichmäßige Porenstruktur und eine gleichmäßige Dicke (Stärke) der Bahn über die gesamte Breite erzielt werden. Dies ist darin zu begründen, dass die Kautschukmischungsbahn schon vor der Vulkanisation die gewünschte Dicke aufweist und ungleichmäßige Temperatur- und Druckverhältnisse in der Vulkanisationsanlage kaum Einfluss auf die Materialdicke (Materialstärke) haben.

Der Silikonkautschukmischung können unterschiedliche Mengen an Mikrokugeln zudosiert werden. Für eine nicht zu trockene Mischung und gute Produkteigenschaften der vulkanisierten Mischung hat es sich als vorteilhaft erwiesen, wenn die Silikonkautschukmischung 0,5 bis 20 Gew.-% Mikrokugeln enthält.

Gemäß einer weiteren vorteilhaften Weiterbildung der Erfindung, wird das Mikrokugeln-Silikonöl-Gemisch am Schluss des Mischprozesses nach Zudosierung sämtlicher anderer Inhaltsstoffe der Silikonkautschukmischung, wie Füllstoffe, Alterungsschutzmittel, Vulkanisationschemikalien usw., zur Mischung gegeben. Auf diese Weise kann die mechanische Belastung der Mikrokugeln weiter reduziert werden.

Die nach dem erfindungsgemäßen Verfahren hergestellten Bahnen aus Silikongummi mit poröser Struktur und einer Dichte von 0,1 bis 1,1 g/cm³ können für unterschiedlichste Zwecke eingesetzt werden, wo eine flexible bzw. gummiartige Eigenschaft in Kombination mit z. B. thermischer Isolierung notwendig ist (Taucher- oder Wärmeschutzanzüge, etc.) Hierzu können die Bahnen auch vor der Vulkanisation mit weiteren Gewebe- und/oder Kautschukmischungslagen dubliert werden.

Anhand eines Ausführungsbeispiels soll die Erfindung näher erläutert werden, ohne dabei auf dieses beschränkt zu sein.

Es wurde eine auf Silikonkautschuk basierende Kautschukmischung mit 1,2 Gew.-% hohlen expandierten Mikrokugeln des Typs Expancel® Mikrosphären DE 40 der Firma Akzo Nobel hergestellt.

Gemäß einer ersten Verfahrensvariante wurde dazu ein Silikonöl des Typs 350 der Firma Basildon Chemicals, England mit Mikrokugeln des Typs Expancel® Mikrosphären DE 40 der Firma Akzo Nobel im Gewichtsverhältnis 1:1 in einem Flügelmischer gemischt. Die Mischzeit betrug ca. 60 min.

Gemäß einer zweiten Verfahrensvariante wurde zunächst ein Silikonöl des Typs 350 der Firma Basildon Chemicals, England mit Isopropanol im Gewichtsverhältnis von 1:5 gemischt. Anschließend wurden die Mikrokugeln des Typs Expancel® Mikrosphären DE 40 der Firma Akzo Nobel in einem Flügelmischer mit dem vorgenannten Gemisch aus Silikonöl und Isopropanol im Gewichtsverhältnis von 1:6 gemischt. Die Mischzeit betrug ca. 20 min. Im Anschluss wurde das Isopropanol unter Anlegen eines Vakuums an den Flügelmischer wieder entfernt. Es wurde in einer Kühlfalle aufgefangen und kann wiederverwendet werden.

Dann erfolgte die Herstellung der Silikonkautschukmischung mit den üblichen Zuschlagstoffen, wie Alterungsschutzmitteln, Farbstoffen und Vernetzern auf einem Walzwerk. Am Ende des Mischprozesses wurde das Mikrokugeln-Silikonöl-Gemisch, welches gemäß erster oder zweiter Verfahrensvariante hergestellt wurde, eingemischt. Die Mischung wurde zu Bahnen mit einer Dicke von 1 bis 4 mm kalandriert und im Anschluss über ein Rotations-Vulkanisierverfahren kontinuierlich vulkanisiert. Die erhaltenen Bahnen hatten eine gleichmäßige Porenstruktur und eine gleichmäßige Dicke über die gesamte Breite von 1400 mm, wobei auch mehrere Bahnen gleichzeitig bis zu einer Dicke von 10 mm zusammenvulkanisiert worden sind.

## Patentansprüche

1. Verfahren zur Herstellung von Flächenprodukten aus Silikongummi mit poröser Struktur,
**dadurch gekennzeichnet, dass**
- ein Mikrokugeln-Silikonöl-Gemisch aus Mikrokugeln und Silikonöl im Gewichtsverhältnis von 10:1 bis 1:10 erzeugt wird, wobei die Mikrokugeln hohle, vorexpandierte Mikrokugeln mit einer Größe von 5 bis 100 µm sind,
- eine Silikonkautschukmischung mit üblichen Mischungsbestandteilen erzeugt wird,
- das Mikrokugeln-Silikonöl-Gemisch auf einer Walze in die Silikonkautschukmischung eingemischt wird,
- die Silikonkautschukmischung zu Bahnen kalandriert wird und
- die Bahnen vulkanisiert werden.

2. Verfahren nach Anspruch 1, **dadurch gekennzeichnet, dass** die Mikrokugeln mit dem Silikonöl in einem Gewichtsverhältnis von 5:1 bis 1:5 vermischt werden.

3. Verfahren nach Anspruch 1 oder 2, **dadurch gekennzeichnet, dass** das Silikonöl vor dem Vermischen mit den Mikrokugeln mit einem organischen Lösemittel, vorzugsweise Isopropanol, im Gewichtsverhältnis von 5:1 bis 1:20 vermischt wird, welches vor der Einbringung in die Silikonkautschukmischung wieder entfernt wird.

4. Verfahren nach Anspruch 1, **dadurch gekennzeichnet, dass** die Bahn über ein Rotations-Vulkanisierverfahren, insbesondere Auma-Verfahren, kontinuierlich vulkanisiert wird.

5. Verfahren nach zumindest einem der vorhergehenden Ansprüche, **dadurch gekennzeichnet, dass** die Kautschukmischung 0,5 bis 20 Gew.-% Mikrokugeln enthält.

## Claims

1. Process for producing sheet products made of silicone rubber with porous structure,
**characterized in that**
- a microbead-silicone-oil mixture made of microbeads and silicone oil in a ratio by weight of from 10:1 to 1:10 is produced, wherein the microbeads are hollow, preexpanded microbeads with a size of from 5 to 100 pm,
- a silicone rubber mixture is produced with conventional mixture constituents,
- the microbead-silicone-oil mixture is incorporated into the silicone rubber mixture by mixing on a roll,
- the silicone rubber mixture is calendered to give webs, and
- the webs are vulcanized.

2. Process according to Claim 1, **characterized in that** the microbeads are mixed with the silicone oil in a ratio by weight of from 5:1 to 1:5.

3. Process according to Claim 1 or 2, **characterized in that**, prior to mixing with the microbeads, the silicone oil is mixed with an organic solvent, preferably isopropanol, in a ratio by weight of from 5:1 to 1:20, and the solvent is in turn removed prior to introduction into the silicone rubber mixture.

4. Process according to Claim 1, **characterized in that** the web is vulcanized continuously by way of a rotary vulcanization process, in particular an Auma process.

5. Process according to at least one of the preceding claims, **characterized in that** the rubber mixture comprises from 0.5 to 20% by weight of microbeads.

## Revendications

1. Procédé de fabrication de produits plats en caoutchouc de silicone à structure poreuse,
**caractérisé en ce que**
- un mélange de microbilles-huile de silicone constitué par des microbilles et de l'huile de silicone est formé en un rapport en poids de 10:1 à 1:10, les microbilles étant des microbilles creuses pré-expansées d'une taille de 5 à 100 *µ*m,
- un mélange de caoutchouc de silicone contenant les constituants de mélange usuels est formé,
- le mélange de microbilles-huile de silicone est incorporé sur un cylindre dans le mélange de caoutchouc de silicone,
- le mélange de caoutchouc de silicone est calandré en bandes, et
- les bandes sont vulcanisées.

2. Procédé selon la revendication 1, **caractérisé en ce que** les microbilles sont mélangées avec l'huile de silicone en un rapport en poids de 5:1 à 1:5.

3. Procédé selon la revendication 1 ou 2, **caractérisé en ce qu'**avant le mélange avec les microbilles, l'huile de silicone est mélangée avec un solvant organique, de préférence l'isopropanol, en un rapport en poids de 5:1 à 1:20, qui est éliminé avant l'introduction dans le mélange de caoutchouc de silicone.

4. Procédé selon la revendication 1, **caractérisé en ce que** la bande est vulcanisée en continu par un procédé de vulcanisation par rotation, notamment le procédé Auma.

5. Procédé selon au moins l'une quelconque des revendications précédentes, **caractérisé en ce que** le mélange de caoutchouc contient 0,5 à 20 % en poids de microbilles.
